# EUROPEAN PATENT SPECIFICATION

(11) **EP 1 809 475 B1**
(45) Date of publication and mention of the grant of the patent: **10.01.2018**
(21) Application number: 05851469.6
(22) Date of filing: 08.11.2005
(51) Int. Cl.: B32B 27/30, B32B 27/32, B32B 27/40, B32B 15/095, B32B 7/12, B32B 27/06, B32B 27/08, C08G 18/10, C09J 175/04, C08G 18/42, B32B 27/36

(54) **LAMINATING ADHESIVES BASED ON PRIMARY HYDROXYL-CONTAINING CURATIVES**
LAMINIERKLEBSTOFFE AUF DER BASIS VON PRIMÄREN HYDROXYLHALTIGEN HEILMITTELN
ADHESIFS DE STRATIFICATION A BASE DE CATALYSEURS CONTENANT DES HYDROXYLES PRIMAIRES

(30) Priority: 12.11.2004 US 986591; 24.02.2005 US 65501
(43) Date of publication of application: 25.07.2007
(73) Proprietor: Henkel IP & Holding GmbH, 40589 Düsseldorf (DE)
(72) Inventor: SIMONS, J., Brandon, Raleigh, North Carolina 27615 (US)
(74) Representative: Henkel IP Department
(86) International application number: PCT/US2005/040608
(87) International publication number: WO 2006/060129

(56) References cited:
- DE-A1- 19 914 076
- JP-A- 2003 064 342
- US-A- 3 192 186
- US-B1- 6 299 715

## Description

### FIELD OF THE INVENTION

The present invention provides two component laminating adhesives based on polyurethanes in which one of the components contains a curative bearing primary hydroxyl groups and the other component contains an isocyanate-functionalized compound. The curative is prepared by a multistep process comprising reacting a first polyol containing predominately secondary hydroxyl groups with a stoichiometric excess of a reactant selected from the group consisting of polybasic acids, polybasic acid anhydrides, polybasic acid esters, and polyisocyanates to form an intermediate containing at least about two terminal functional groups per molecule selected from the group consisting of isocyanate, carboxylic acid and carboxylic acid ester and reacting said intermediate with a stoichiometric excess of a second polyol containing predominately primary hydroxyl groups. The resulting curative thus typically contains at least four ester or urethane linkages per molecule. The two components are combined and the resulting adhesive used to laminate a thin polymeric film or foil to one or more thin polymeric films or foils.

### BACKGROUND OF THE INVENTION

Laminating adhesives are widely used in the manufacture of film/foil laminates. Among many such known systems, the use of polyurethane based laminating adhesives is preferred because of their many desirable properties including good adhesion, peel strength, heat seal strength and resistance to aggressive filling goods. Typically, an isocyanate-containing polyurethane prepolymer obtained by the reaction of excess diisocyanate with a polyether and/or polyester containing two or more active hydrogen groups per molecule is used in combination with a second component. The second component usually is a polyether and/or polyester functionalized with two or more hydroxyl groups per molecule. The two components are combined in a predetermined ratio and applied on one of the film or foil substrates, which is then laminated to the second substrate. Application may be from a solution in a suitable solvent using gravure or smooth roll coating cylinders or from a solvent-free state using special application machinery.

The second component is commonly comprised of hydroxyl-terminated polyesters prepared by reacting polybasic acids or anhydrides with a stoichiometric excess of a mixture of glycols that have primary or secondary hydroxyl groups and/or glycols that contain both primary and secondary hydroxyl groups in the same molecule (such as glycerol). Many secondary hydroxyl-containing polyols can be used to advantage to make polyester polyols. In particular, commercially available polypropylene glycols such as dipropylene glycol, tripropylene glycol, PPG 425, PPG 1025, PPG 2025 and PPG 3025 all have terminal hydroxyl groups which are predominately (e.g., at least 90%) secondary. It will often be desirable to prepare polyester polyols incorporating higher molecular weight polypropylene glycols, as such substances tend to improve the flexibility and viscosity properties of polyester polyols.

Due to the faster reaction rates of primary hydroxyl groups with carboxylic acid groups or acid anhydrides, if the glycol component to be reacted with the polybasic acid component contains both primary and secondary hydroxyl groups, the predominate esters formed are with the primary hydroxyl groups. The secondary hydroxyl groups remain predominately unreacted. As the polymerization/condensation proceeds, a polyester polyol having a higher molecular weight than desired is generated as a result of the preferential reaction of the glycols containing primary hydroxyl groups. A high proportion of the glycols containing secondary hydroxyl groups remain unreacted, however. The resulting reaction product thus can be a mixture of a relatively high molecular weight polyester polyol and unreacted secondary hydroxyl-containing glycol, which may not provide favorable performance when used as a curative in a two component laminating adhesive.

If the secondary hydroxyl groups do eventually react, the polyester will statistically tend to be terminated with secondary hydroxyl groups. This is a disadvantage, since termination of the polyester with primary hydroxyl groups is often desired so that reaction with isocyanate-functionalized prepolymers will occur at a relatively fast rate, leading to quick curing of the adhesive. A polyester polyol that has secondary hydroxyl groups will react much more slowly with isocyanate-functionalized prepolymers.

JP 2003 064342 A discloses a two component laminating adhesive comprising a polyisocyanate-functional component A and a polyol component B. As polyol B, a polyether polyurethane polyol is described, which is obtained as follows: Polypropylene glycol representing a polyol containing essentially only secondary OH groups is reacted with an excess of TDI as polyisocyanate. As a result, an NCO-functional prepolymer is obtained which is further reacted with diethanolamine the latter representing a polyol containing only primary OH groups. The adhesive is used for making laminates from materials such as plastic films made out of thermoplastic materials such as PET, LLDPE. Also mentioned are laminates comprising metal vapor deposition films and aluminium foils.

DE 199 14 076 A1 discloses a composition comprising a polyisocyanate component A and a polyol component B. As polyisocyanate, a prepolymer on the basis of PPG and MDI is used. The polyol is obtained by reacting polyoxypropylene glycol having essentially only secondary OH groups with TDI thereby forming an NCO-functionalised intermediate. Said intermediate is further end group-modified via reaction with 1,4-butane diol as polyol containing only primary OH groups, thereby forming a polyether polyurethane polyol. The composition is used for making polyurethane foams.

US 3 192 186 A discloses OH-terminated polyols, which are obtained by reacting polypropylene glycol as compound having essentially only secondary OH groups with a polyisocyanate such as TDI to form an NCO-functional intermediate. The intermediate is subsequently reacted with triethylene glycol which has only primary OH groups thereby forming a polyether polyurethane polyol. Said polyol is reacted with a polyisocyanate such as 1,5-NDI to form an elastomeric polyurethane material, which can suitably be used for applications such as plates, pipes, cylinders or packings.

### SUMMARY OF THE INVENTION

The present invention provides a two component laminating adhesive comprising Component A and Component B, wherein Component A comprises at least one isocyanate-functionalized compound and Component B comprises a curative containing at least two primary hydroxyl groups per molecule. The curative is obtained by a process comprising reacting a first polyol containing predominately secondary hydroxyl groups with a stoichiometric excess of a reactant selected from the group consisting of polybasic acids, polybasic acid anhydrides, and polybasic acid esters to form an intermediate containing at least two terminal functional groups per molecule selected from the group consisting of carboxylic acid and carboxylic acid ester. The intermediate is reacted with a stoichiometric excess of a second polyol containing predominately primary hydroxyl groups, selected from the group consisting of glycerol, 1,2,6-hexanetriol, 1,2,4-butanetriol, and mixtures thereof, to form the curative.

A laminate may be formed by combining the two components to provide an adhesive and then using the adhesive to adhere one polymeric film or metallic foil to another polymeric film or metallic foil. The adhesive layer between the film or foil layers of the laminate is then cured.

### DETAILED DESCRIPTION OF CERTAIN EMBODIMENTS OF THE INVENTION

The curative utilized as a constituent of the laminating adhesive of the present invention is obtained by a multistage process. In one step, a first polyol containing predominately secondary hydroxyl groups is reacted with a stoichiometric excess of a reactant selected from the group consisting of polybasic acids, polybasic acid anhydrides, and polybasic acid esters to form an intermediate containing at least about two terminal functional groups per molecule selected from the group consisting of carboxylic acid and carboxylic acid ester.

In the context of this invention, the term "predominately" means "more than half" (i.e., "more than 50%"). Thus, the first polyol is a compound or mixture of compounds containing at least two hydroxyl groups per molecule wherein more than half the hydroxyl groups are secondary hydroxyl groups. In one embodiment, more than about 75% of the hydroxyl groups are secondary. In another embodiment, more than about 90% of the hydroxyl groups are secondary. Glycol oligomers and polymers are used as the first polyol in one embodiment of the present invention. For example, the first polyol may be an oligomer or polymer of 1,2-propylene glycol. Illustrative oligomers of 1,2-propylene glycol include dipropylene glycol, tripropylene glycol, tetrapropylene glycol and the like. Illustrative polymers of 1,2-propylene glycol include the polymers obtainable by reacting a polyhydroxyl-functionalized initiator such as water, 1,2-propylene glycol, 1,4-butanediol, glycerol or trimethylolpropane with propylene oxide in the presence of a catalyst such as an alkali metal or a double metal cyanide complex catalyst. Polypropylene glycols having number average molecular weights of from about 200 to about 10,000 or about 300 to about 5000 are suitable for use as the first polyol in the present invention, for example. Other polyoxyalkylene glycols having predominately secondary hydroxyl groups may also be utilized.

The reactant which is reacted in stoichiometric excess with the first polyol may be one or more substances selected from among polybasic acids, polybasic acid anhydrides, and polybasic acid esters.

Suitable polybasic acids include substances containing at least about two carboxylic acid groups per molecule. The polybasic acids may be aliphatic, cycloaliphatic, aromatic and/or heterocyclic. They may where appropriate be substituted, by alkyl groups, alkenyl groups, ether groups or halogens, for example. Examples of suitable polybasic acids include succinic acid, adipic acid, suberic acid, azelaic acid, sebacic acid, phthalic acid, isophthalic acid, terephthalic acid, trimellitic acid, maleic acid, fumaric acid, dimer fatty acid (i.e., dimerized unsaturated fatty acids) or trimer fatty acid or mixtures of two or more thereof. In one embodiment of the invention, the polybasic acid is a linear aliphatic dicarboxylic acid containing from 4 to 12 carbon atoms per molecule or a mixture of such dicarboxylic acids. The polybasic acid may, for example, have a structure corresponding to the general formula HOC(=O)-(CH₂)ₙ-C(=O)OH, where n is an integer of from 2 to 10.

Suitable polybasic acid anhydrides include the anhydrides of the polybasic acids mentioned or described hereinabove. The anhydride of orthophthalic acid is an example of a polybasic acid anhydride that can be used in the present invention.

Suitable polybasic acid esters include the esters of the polybasic acids mentioned or described hereinabove, particularly the lower alkyl (e.g., C₁-C₃) esters of such polybasic acids.

Suitable polyisocyanates include organic compounds containing two or more isocyanate (NCO) functional groups per molecule. These include compounds of the general structure O=C=N-X-N=C=O, where X is an aliphatic, alicyclic or aromatic radical, such as an aliphatic or alicyclic radical having from 4 to 18 carbon atoms. Illustrative polyisocyanates include, for example, 1,5-naphthylene diisocyanate, 4,4'-diphenylmethane diisocyanate (MDI), hydrogenated MDI (H₁₂MDI), xylylene diisocyanate (XDI), tetramethylxylylene diisocyanate (TMXDI), 4,4'-diphenyldimethyl-methane diisocyanate, di- and tetraalkylenediphenylmethane diisocyanate, 4,4'-dibenzyl diisocyanate, 1,3-phenylene diisocyanate, 1,4-phenylene diisocyanate, the isomers of tolylene diisocyanate (TDI), 1-methyl-2,4-diisocyanatocyclohexane, 1,6-diisocyanato-2,2,4-trimethylhexane, 1,6-diisocyanato-2,4,4-trimethylhexane, 1-isocyanatomethyl-3-isocyanato-1,5,5-trimethylcyclohexane (IPDI), chlorinated and brominated diisocyanates, phosphorus-containing diisocyanates, 4,4'-diisocyanatophenylperfluoroethane, tetramethoxybutane 1,4-diisocyanate, butane 1,4-diisocyanate, hexane 1,6-diisocyanate (HDI), dicyclohexylmethane diisocyanate, cyclohexane 1,4-diisocyanate, ethylene diisocyanate, bisisocyanatoethyl phthalate and also diisocyanates having reactive halogen atoms, such as 1-chloromethylphenyl 2,4-diisocyanate, 1-bromomethylphenyl 2,6-diisocyanate, and 3,3-bischloromethyl ether 4,4'- diphenyl diisocyanate.

Sulfur-containing polyisocyanates are obtained, for example, by reacting 2 mol of hexamethylene diisocyanate with 1 mol of thiodiglycol or dihydroxydihexyl sulfide. Further diisocyanates which can be used are, for example, trimethylhexamethylene diisocyanate, 1,4-diisocyanatobutane, 1,12-diisocyanatododecane and dimer fatty acid diisocyanate. Particularly suitable are the following: tetramethylene, hexamethylene, undecane, dodecamethylene, 2,2,4-trimethylhexane, 1,3-cyclohexane, 1,4-cyclohexane, 1,3- or 1,4-tetramethylxylene, isophorone, 4,4-dicyclohexylmethane and lysine ester diisocyanates. In one embodiment of the invention, tetramethylxylylene diisocyanate (TMXDI) is utilized as the polyisocyanate.

Examples of suitable polyisocyanates having a functionality of at least three are the trimerization and oligomerization products of the polyisocyanates already mentioned above, such as are obtainable, with the formation of isocyanurate rings, by appropriate reaction of polyisocyanates, preferably of diisocyanates. Where oligomerization products are used, those particularly suitable have a degree of oligomerization of on average from about 3 to about 5.

Isocyanates suitable for the preparation of trimers are the diisocyanates already mentioned above, particular preference being given to the trimerization products of the isocyanates HDI, MDI or IPDI.

Likewise suitable for use as the polyisocyanate are the polymeric isocyanates, such as are obtained, for example, as a residue in the distillation bottoms from the distillation of diisocyanates. Polymeric MDI (PMDI), which may be obtained from the distillation residue during the distillation of MDI, is particularly suitable.

The first polyol(s) and reactant(s) are reacted for a time and at a temperature effective to convert most or preferably essentially all of the hydroxyl groups on the first polyol to ester groups. The amounts of the first polyol(s) and the reactant(s) which are reacted are adjusted such that the reactant is in stoichiometric excess relative to the first polyol. Preferably, the molar ratio of R/OH (where R represents the functional groups on the reactant capable of reacting with the hydroxyl groups of the first polyol, e.g., -CO₂H or -CO₂R' where R' = C₁-C₃ alkyl) is at least about 2. Conditions effective to achieve such conversion of the first polyol hydroxyl groups will be apparent to those skilled in the art and will vary somewhat depending upon the reactant and first polyol selected.

For example, where the reactant is a polybasic acid or polybasic acid ester such that the first polyol hydroxyl groups must undergo esterification, reaction temperatures of from about 100 degrees C to about 300 degrees C and reaction times of from about 1 to about 12 hours are typically suitable. The esterification may, if desired, be accelerated (increased in rate) and/or performed at a lower temperature by carrying out the reaction in the presence of a catalyst, including any of the conventional esterification catalysts known in the art such as, for example, acids (e.g., sulfuric acid, phosphoric acid, sulfonic acids), bases (e.g., alkali metal and alkaline earth metal oxides and hydroxides such as potassium hydroxide, lithium hydroxide), organotin compounds (e.g., dibutyl tin dilaurate), and titanium compounds (e.g., titanium tetraisopropoxide, titanium tetrabutoxide). Typically, the catalyst is present at a concentration of from about 0.001 to about 0.1 percent by weight of the combined weight of fatty acid triglyceride(s) and polyalcohol(s). Following esterification, the catalyst may be removed from the polyhydroxyl-functionalized transesterification product. The esterification may be carried out under vacuum to facilitate the removal of water, alcohol or other volatiles that may form.

The intermediate formed as a result of the aforedescribed reaction of the first polyol and the reactant contains at least about two terminal functional groups per molecule selected from the group consisting of carboxylic acid and carboxylic acid ester. This intermediate is subsequently reacted with a stoichiometric excess of a second polyol containing predominately primary hydroxyl groups, selected from the group consisting of glycerol, 1,2,6-hexanetriol, 1,2,4-butanetriol, and mixtures thereof.

The second polyol reacted with the intermediate for a time and at a temperature effective to convert most or preferably essentially all of the terminal functional groups on the intermediate to ester groups. Generally speaking, such conditions will typically be similar to those described hereinabove in connection with the preparation of the intermediate. The amounts of the second polyol(s) and the intermediate which are reacted are adjusted such that the second polyol is in stoichiometric excess relative to the intermediate. Preferably, the molar ratio of R/OH (where R is the terminal functional group (e.g., -CO₂H or -CO₂R' where R' = C₁-C₃ alkyl) on the intermediate capable of reacting with the hydroxyl groups of the second polyol) is at least about 2.

Typically, the curative thereby produced by reacting the intermediate with the second polyol will have an equivalent weight per hydroxyl group of from about 300 to about 1000. The viscosity of the curative is typically from about 1000 to about 10,000 cps at 25 degrees C.

In one embodiment of the invention, the curative produced has the structure: Y-O-C(=O)-Z-C(=O)-O-CH(CH₃)-CH₂-O-(C₃H₆O)ₙ-CH₂-CH(CH₃)-O-C(=O)-Z'-C(=O)-O-Y' wherein Y and Y' are HO-CH₂-CH(OH)-CH₂-, Z and Z' are the same or different and are selected from the group consisting of C₆H₄- (i.e., a divalent benzene radical) and - (CH₂)ₒ-, p is 0 or an integer of 1 to 3, o is an integer of from 2 to 10, and n is 0 or an integer of from 1 to 100.

The curative prepared as described hereinabove may be utilized as a constituent of Component B of the two component laminating adhesive of the present invention. For example, from about 1 up to 100 weight percent of Component B may be comprised of one or more such curatives. Other isocyanate-reactive substances, such as those described in more detail below as well as other isocyanate-reactive substances known or conventionally used in two component laminating adhesives, may also be present in Component B, if so desired.

Isocyanate-reactive substances generally include those compounds which are active hydrogen-functionalized. "Active hydrogen-functionalized" as used herein refers to a functional group containing a hydrogen atom which, because of its position in the compound, displays significant activity according to the Zerewitnoff test described by Wohler in the Journal of the American Chemical Society, Vol. 49, p. 3181 (1927). Suitable isocyanate-reactive substances include those polymeric substances having about 2 to about 4 functional groups containing active hydrogen which are capable of reacting with isocyanate such as hydroxyl and primary or secondary amino groups. The isocyanate-reactive substance may have a number average molecular weight of from about 200 to about 100,000. In another embodiment, the molecular weight is from about 500 to about 50,000. Polyester polyols, polyether polyols, polyether ester polyols and mixtures thereof may be utilized. Examples of polyester polyols are those obtained by reacting dibasic acids such as terephthalic acid, isophthalic acid, adipic acid, azaelaic acid and sebacic acid, dialkyl esters thereof and mixtures thereof with glycols such as ethylene glycol, propylene glycol, diethylene glycol, butylene glycol, neopentyl glycol, 2-methyl-1, 3- propanediol, 1,6-hexanediol and mixtures thereof. Polycaprolactone polyols may also be used. Exemplary polyether polyols include those obtained by polymerizing oxirane compounds such as ethylene oxide, propylene oxide, butylene oxide, oxirane and tetrahydrofuran using water or low molecular weight polyols such as ethylene glycol, propylene glycol, trimethylol propane or glycerin as an initiator. Copolymers of oxiranes (including random, block, and end-capped copolymers) are also suitable for use.

Examples of polyether ester polyols include those obtained by reacting polyether polyols with dibasic acids such as those mentioned herein above in connection with polyester polyols.

Low molecular weight polyhydroxy compounds having a number average molecular weight of less than 200 may also be used in Component B conjointly with the primary hydroxyl-containing curative prepared by the multistage process previously described herein. Suitable polyhydroxy compounds of this type include ethylene glycol, propylene glycol, butylene glycol, diethylene glycol, dipropylene glycol, hexylene glycol, neopentyl glycol, cyclohexene dimethanol, glycerin and trimethylolpropane.

Specific mention may be made of the following isocyanate-reactive substances suitable for use in Component B in addition to the curative produced by the multistage process described herein:
- saturated and unsaturated glycols such as ethylene glycol or condensates of ethylene glycol, butane-1,3-diol, butane-1,4-diol, 2-butene-1,4-diol, 2-butyne-1,4-diol, propane-1,2-diol, propane-1,3-diol, neopentyl glycol, hexanediol, bishydroxymethylcyclohexane, dioxyethoxyhydroquinone, bis-glycol terephthalate, N,N'-di(2-hydroxyethyl)succinamide, N,N'-dimethyl-N,N'-di(2-hydroxy-ethyl)succinamide, 1,4-di(2-hydroxymethyl-mercapto)-2,3,5,6-tetrachlorobenzene, 2-methylene-propane-1,3-diol, 2-methylpropane-1,3-diol, 3-pyrrolidino-1,2-propanediol, 2-methylenepentane-2,4-diol, 3-alkoxy-1,2-propanediol, 2-ethylhexane-1,3-diol, 2,2-dimethylpropane-1,3-diol, 1,5-pentanediol, 2,5-dimethyl-2,5-hexanediol, 3-phenoxy-1,2-propanediol, 3-benzyloxy-1,2-propanediol, 2,3-dimethyl-2,3-butanediol, 3-(4-methoxyphenoxy)-1,2-propanediol, and hydroxymethylbenzyl alcohol;
- aliphatic, cycloaliphatic, and aromatic diamines such as ethylenediamine, hexamethylenediamine, 1,4-cyclohexylenediamine, piperazine, N-methylpropylenediamine, diaminodiphenyl sulfone, diaminodiphenyl ether, diaminodiphenyldimethyl- methane, 2,4-diamino-6-phenyltriazine, isophoronediamine, dimer fatty acid diamine, diaminodiphenylmethane, aminodiphenylamine or the isomers of phenylenediamine;
- carbohydrazides or hydrazides of dicarboxylic acids;
- amino alcohols such as ethanolamine, propanolamine, butanolamine, N-methylethanolamine, N-methylisopropanolamine, diethanolamine, triethanolamine, and higher di- or tri(alkanolamines);
- aliphatic, cycloaliphatic, aromatic and heterocyclic mono- and diaminocarboxylic acids such as glycine, 1- and 2-alanine, 6-aminocaproic acid, 4-aminobutyric acid, the isomeric mono- and diaminobenzoic acids, and the isomeric mono- and diaminonaphthoic acids.

Component B may also comprise a hydroxy-functional natural oil or fat such as, for example, castor oil, and/or an epoxidized natural oil or fat which has been ring-opened with one or more alcohols.

Component A of the present invention contains at least one compound having two or more isocyanate groups per molecule. The isocyanate groups may be free - NCO groups, but can also be blocked or masked -NCO groups. One particular embodiment of the invention employs one or more isocyanate-functionalized polyurethane prepolymers in Component A. In the context of the present invention, a polyurethane prepolymer is a compound such as results, for example, from the reaction of a polyol component with at least one isocyanate having a functionality of at least two. This reaction can take place without solvent or in a solvent, ethyl acetate, acetone or methyl ethyl ketone, for example. The term "polyurethane prepolymer" embraces not only compounds having a relatively low molecular weight, such as are formed, for example, from the reaction of a polyol with an excess of polyisocyanate, but also oligomeric or polymeric compounds. "Perfect" polyurethane prepolymers, containing a single polyol moiety capped at each end or terminus with a polyisocyanate moiety and very little, if any, free polyisocyanate monomer or oligomeric or polymeric compounds (containing two or more polyol moieties per molecule) may also be utilized.

Molecular weight figures based on polymeric compounds refer, unless otherwise indicated, to the numerical average of the molecular weight (Mₙ). The polyurethane prepolymers used in the context of the present invention generally may have a molecular weight of from 500 to 27,000, alternatively from 700 to 15,000, or alternatively from 700 to 8,000 g/mol.

Likewise embraced by the term "polyurethane prepolymers" are compounds as formed, for example, from the reaction of a trivalent or tetravalent polyol with a molar excess of diisocyanates, based on the polyol. In this case one molecule of the resultant compound bears two or more isocyanate groups.

Polyurethane prepolymers having isocyanate end groups are well known in the art. They can be crosslinked or chain-extended with suitable curing agents - usually polyfunctional alcohols - in a simple way to form substances of higher molecular weight. To obtain polyurethane prepolymers having terminal isocyanate groups it is customary to react polyfunctional alcohols with an excess of polyisocyanates, generally at least predominantly diisocyanates. In this case the molecular weight can be controlled at least approximately by way of the ratio of OH groups to isocyanate groups. While a ratio of OH groups to isocyanate groups of 1:1 or near to 1:1 often leads to substances with high molecular weights, it is the case with a ratio of approximately 2:1, for example, when using diisocyanates, that one diisocyanate molecule is attached on average to each OH group, so that in the course of the reaction, in the ideal case, there is no oligomerization or chain extension.

Excess unreacted polyisocyanate monomer may be removed from the polyurethane prepolymer reaction product initially obtained by any known method such as, for example, distillation to provide a prepolymer having a desirably low level of polyisocyanate monomer (e.g., less than 1 weight %).

Polyurethane prepolymers are customarily prepared by reacting at least one polyisocyanate, preferably a diisocyanate, and at least one component having functional groups which are reactive toward isocyanate groups, generally a polyol component, which is preferably composed of diols. The polyol component may contain only one polyol, although it is also possible to use a mixture of two or more polyols as the polyol component. By a polyol is meant a polyfunctional alcohol, i.e., a compound having more than one OH group in the molecule. By "functional groups which are reactive toward isocyanate groups" are meant, in the context of the present text, functional groups which can react with isocyanate groups to form at least one covalent bond.

Suitable reactive functional groups containing active hydrogen may be monofunctional in the sense of a reaction with isocyanates: OH groups or mercapto groups, for example. Alternatively, they may also be difunctional with respect to isocyanates: amino groups, for example. A molecule containing a primary amino group, accordingly, also has two functional groups which are reactive toward isocyanate groups. In this context it is unnecessary for a single molecule to have two separate functional groups that are reactive toward isocyanate groups. What is critical is that the molecule is able to connect with two isocyanate groups with the formation in each case of one covalent bond.

As the polyol component it is possible to use a multiplicity of polyols. These are, for example, aliphatic alcohols having from 2 to 4 OH groups per molecule. The OH groups may be both primary and secondary. Examples of suitable aliphatic alcohols include ethylene glycol, propylene glycol, butane-1,4-diol, pentane-1,5-diol, hexane-1,6-diol, heptane-1,7-diol, octane-1,8-diol and their higher homologs or isomers such as result in a formal sense from a stepwise extension of the hydrocarbon chain by one CH₂ group in each case or with the introduction of branches into the carbon chain. Likewise suitable are higher polyfunctional alcohols such as, for example, glycerol, trimethylolpropane, pentaerythritol and also oligomeric ethers of said substances with themselves or in a mixture of two or more of said ethers with one another.

As the polyol component it is additionally possible to use reaction products of low molecular weight polyfunctional alcohols with alkylene oxides, referred to as polyether polyols. The alkylene oxides have preferably 2 to 4 carbon atoms. Suitable examples are the reaction products of ethylene glycol, propylene glycol, the isomeric butanediols, hexanediols or 4,4'-dihydroxy-diphenylpropane with ethylene oxide, propylene oxide or butylene oxide, or with mixtures of two or more thereof. Also suitable, furthermore, are the reaction products of polyfunctional alcohols, such as glycerol, trimethylolethane or trimethylolpropane, pentaerythritol or sugar alcohols, or mixtures of two or more thereof, with the stated alkylene oxides to form polyether polyols. Particularly suitable polyether polyols are those having a molecular weight from about 100 to about 10,000, preferably from about 200 to about 5,000. Likewise suitable as the polyol component are polyether polyols such as are formed, for example, from the polymerization of tetrahydrofuran.

The polyethers may be synthesized using methods known to the skilled worker, by reaction of the starting compound having a reactive hydrogen atom with alkylene oxides: for example, ethylene oxide, propylene oxide, butylene oxide, styrene oxide, tetrahydrofuran or epichlorohydrin or mixtures of two or more thereof. Examples of suitable starting compounds are water, ethylene glycol, propylene 1,2-glycol or 1,3-glycol, butylene 1,4-glycol or 1,3-glycol, hexane-1,6-diol, octane-1,8-diol, neopentylglycol, 1,4-hydroxymethylcyclohexane, 2-methyl-1,3-propanediol, glycerol, trimethylolpropane, hexane-1,2,6-triol, butane-1,2,4-triol, trimethylolethane, pentaerythritol, mannitol, sorbitol, methylglycosides, sugars, phenol, isononylphenol, resorcinol, hydroquinone, 1,2,2- or 1,1,2-tris(hydroxyphenyl)ethane, ammonia, methylamine, ethylenediamine, tetra- or hexamethyleneamine, triethanolamine, aniline, phenylenediamine, 2,4- and 2,6-diaminotoluene and polyphenylpolymethylene-polyamines, such as are obtainable by aniline-formaldehyde condensation, or mixtures of two or more thereof.

Likewise suitable for use as the polyol component are polyethers which have been modified by vinyl polymers. Products of this kind are available, for example, by polymerizing styrene or acrylonitrile, or a mixture thereof, in the presence of polyethers.

Polyester polyols having a molecular weight of from about 200 to about 10,000 are likewise suitable as the polyol component. Thus, for example, it is possible to use polyester polyols formed by reacting low molecular weight alcohols, especially ethylene glycol, diethylene glycol, neopentyl glycol, hexanediol, butanediol, propylene glycol, glycerol or trimethylolpropane, with caprolactone. Likewise suitable as polyfunctional alcohols for preparing polyester polyols are 1,4-hydroxymethylcyclohexane, 2-methyl-1,3-propanediol, butane-1,2,4-triol, triethylene glycol, tetraethylene glycol, polyethylene glycol, dipropylene glycol, polypropylene glycol, dibutylene glycol and poly-butylene glycol.

Further suitable polyester polyols are preparable by polycondensation. For instance, difunctional and/or trifunctional alcohols can be condensed with a substoichiometric amount of dicarboxylic acids and/or tricarboxylic acids, or their reactive derivatives (e.g., anhydrides, esters), to form polyester polyols. Examples of suitable dicarboxylic acids are adipic acid or succinic acid and their higher homologs having up to 16 carbon atoms, unsaturated dicarboxylic acids such as maleic acid or fumaric acid, and also aromatic dicarboxylic acids, particularly the isomeric phthalic acids, such as phthalic acid, isophthalic acid or terephthalic acid. Examples of suitable tricarboxylic acids are citric acid or trimellitic acid. These acids may be used individually or as mixtures of two or more thereof. Particularly suitable alcohols are hexanediol, ethylene glycol, 1,4-butanediol, diethylene glycol, glycerol or neopentyl glycol or mixtures of two or more thereof. Typically, the conditions used in such polycondensation reactions to form the polyhydroxyl-functionalized polyester will be similar to those previously described in connection with the reaction of polyols with polybasic acids, polybasic acid esters or polybasic acid anhydrides to form the intermediate used in the preparation of the curatives of the present invention. To obtain hydroxyl end groups, an excess of hydroxyl equivalents relative to carboxyl equivalents is employed. Typically, hydroxyl:carboxyl equivalent ratios range from about 2:1 to about 15:14. The nearer this ratio is to unity, the higher the molecular weight of the polyhydroxyl-functionalized polyester will be. The extent of conversion of carboxylic acid groups (or equivalents thereof) to ester groups (as part of the polyester formed) is typically at least 99%, more preferably at least about 99.9%. Particularly suitable acids include isophthalic acid, orthophthalic acid anhydride and adipic acid and their mixtures. Particularly suitable di- and trifunctional alcohols which can be used in combination with the hydroxyl-functionalized transesterification product include ethylene glycol, ethylene glycol oligomers (e.g., diethylene glycol), polypropylene glycol, glycerin and mixtures thereof.

Polyester polyols of high molecular weight include, for example, the reaction products of polyfunctional alcohols, preferably difunctional alcohols (together where appropriate with small amounts of trifunctional alcohols) and polyfunctional carboxylic acids, preferably difunctional carboxylic acids. Instead of free polycarboxylic acids use may also be made (if possible) of the corresponding polycarboxylic anhydrides or corresponding polycarboxylic esters with alcohols having preferably 1 to 3 carbon atoms. The polycarboxylic acids may be aliphatic, cycloaliphatic, aromatic or heterocyclic or both. They may where appropriate be substituted, by alkyl groups, alkenyl groups, ether groups or halogens, for example. Examples of suitable polycarboxylic acids include succinic acid, adipic acid, suberic acid, azelaic acid, sebacic acid, phthalic acid, isophthalic acid, terephthalic acid, trimellitic acid, phthalic anhydride, tetrahydrophthalic anhydride, hexahydrophthalic anhydride, tetrachlorophthalic anhydride, endomethylenetetrahydrophthalic anhydride, glutaric anhydride, maleic acid, maleic anhydride, fumaric acid, dimer fatty acid or trimer fatty acid or mixtures of two or more thereof. Where appropriate, minor amounts of monofunctional fatty acids may be present in the reaction mixture.

The polyesters may where appropriate contain a small fraction of carboxyl end groups. Polyesters obtainable from lactones, ε-caprolactone for example, or hydroxycarboxylic acids, co-hydroxycaproic acid for example, may likewise be used.

Polyacetals and polyester ether polyols are likewise suitable as the polyol component. By polyacetals are meant compounds obtainable from glycols reacted with aldehydes, for example, diethylene glycol or hexanediol or a mixture thereof condensed with formaldehyde. Polyacetals which can be used in the context of the invention may likewise be obtained by the polymerization of cyclic acetals.

Further suitable polyols include polycarbonates. Polycarbonates can be obtained, for example, by reacting diols, such as propylene glycol, butane-1,4-diol or hexan-1,6-diol, diethylene glycol, triethylene glycol or tetraethylene glycol, or mixtures of two or more thereof, with diaryl carbonates, for example, diphenyl carbonate, or phosgene.

Likewise suitable as the polyol component are polyacrylates which carry OH groups. These polyacrylates are obtainable, for example, by polymerizing ethylenically unsaturated monomers which carry an OH group. Monomers of this kind are obtainable, for example, by esterifying ethylenically unsaturated carboxylic acids and difunctional alcohols, the alcohol generally being present in a slight excess. Examples of ethylenically unsaturated carboxylic acids suitable for this purpose are acrylic acid, methacrylic acid, crotonic acid or maleic acid. Corresponding esters carrying OH groups are, for example, 2-hydroxyethyl acrylate, 2-hydroxyethyl methacrylate, 2-hydroxypropyl acrylate, 2-hydroxypropyl acrylate, 2-hydroxypropyl methacrylate, 3-hydroxypropyl acrylate or 3-hydroxypropylmethacrylate or mixtures of two or more thereof.

In addition to the aforedescribed polyol compounds, polyisocyanates are important building blocks of the polyurethane prepolymers which can be used in Component A of the two component laminating adhesives of the present invention. These include all of the polyisocyanates mentioned or described previously in connection with the preparation of the curatives of the present invention.

The amounts of Component A and Component B used in the laminating adhesive systems of this invention will generally be adjusted so as to provide an NCO/active hydrogen equivalent ratio in the range of from about 1 to 10 in one embodiment of the invention, from about 1.05 to about 5 in another embodiment, and from about 1.1 to about 2 in yet another embodiment. Typically, the free isocyanate content (prior to any reaction between Component A and Component B) will be from about 1 % to about 25 % by weight based on the total weight of the two component adhesive.

Where appropriate, in addition to the isocyanate-functionalized compound(s) and active hydrogen-functionalized compound(s) previously described, the two component laminating adhesive of the invention may comprise one or more further additives. The additives may, for example, account for up to about 10% by weight of the overall two component adhesive.

The optional additives which can be used in the context of the present invention include solvents (although preferably the two component laminating adhesive is essentially free of solvent), water, adhesion promoters, catalysts, plasticizers, stabilizers, antioxidants, light stabilizers, fillers, dyes, pigments, fragrances, preservatives or mixtures thereof.

The film or films to be coated or adhered to each other using the two component formulations of the present invention may be comprised of any of the materials known in the art to be suitable for use in flexible packaging, including both polymeric and metallic materials as well as paper (including treated or coated paper). Thermoplastics are particularly preferred for use as at least one of the layers. The materials chosen for individual layers in a laminate are selected to achieve specific desired combinations of properties, e.g., mechanical strength, tear resistance, elongation, puncture resistance, flexibility/stiffness, gas and water vapor permeability, oil and grease permeability, heat sealability, adhesiveness, optical properties (e.g., clear, translucent, opaque), formability, merchantability and relative cost. Individual layers may be pure polymers or blends of different polymers. The polymeric layers are often formulated with colorants, anti-slip, anti-block, and anti-static processing aids, plasticizers, lubricants, fillers, stabilizers and the like to enhance certain layer characteristics.

Particularly preferred polymers for use in the present invention include, but not limited to, polyethylene (including low density polyethylene (LDPE), medium density polyethylene (MDPE), high density polyethylene (HPDE), high molecular weight, high density polyethylene (HMW-HDPE), linear low density polyethylene (LLDPE), linear medium density polyethylene (LMPE)), polypropylene (PP), oriented polypropylene, polyesters such as poly (ethylene terephthalate) (PET) and poly (butylene terephthalate) (PBT), ethylene-vinyl acetate copolymers (EVA), ethylene-acrylic acid copolymers (EAA), ethylene-methyl methacrylate copolymers (EMA), ethylene-methacrylic acid salts (ionomers), hydrolyzed ethylene-vinyl acetate copolymers (EVOH), polyamides (nylon), polyvinyl chloride (PVC), poly(vinylidene chloride) copolymers (PVDC), polybutylene, ethylene-propylene copolymers, polycarbonates (PC), polystyrene (PS), styrene copolymers, high impact polystyrene (HIPS), acrylonitrile-butadiene-styrene polymers (ABS), and acrylonitrile copolymers (AN).

The polymer surface may be treated or coated, if so desired. For example, a film of polymer may be metallized by depositing a thin metal vapor such as aluminum onto the film's surface. Metallization may enhance the barrier properties of the finished laminate. A coating of an inorganic oxide such as silicon dioxide or aluminum oxide may also be present on the surface of the polymeric film. The polymer film surface may also be coated with anti-fog additive or subjected to a pretreatment with electrical or corona discharges, or ozone or other chemical agents to increase its adhesive receptivity.

One or more layers of the laminate may also comprise a metal foil, such as aluminum foil. The metal foil will preferably have a thickness of about 5 to 100 µm.

The individual films comprising the laminates of the present invention can be prepared in widely varying thicknesses, for example, from about 5 to about 200 microns. The films, foils, and laminating adhesive formulation can be assembled into the laminate by using any one or more of the several conventional procedures known in the art for such purpose. For instance, the adhesive formulation may be applied to the surface of one or both of two films/foils by means of extrusion, brushes, rollers, blades or spraying and the film/foil surfaces bearing the adhesive composition brought together and passed through a set of rollers (often referred to as nip rollers) which press together the film/foils having the adhesive composition between the films/foils. The resulting laminate may be rolled or wound onto a reel. The adhesive obtained by combining Components A and B may be applied by conventional techniques; e.g., by a multi-roll application station.

Typically, the rate at which the adhesive formulation is applied to the surface of a film or foil is in the range of about 0.2 to about 5 g/m². For example, the two components of the adhesive formulation may be pumped from separate drums or tanks at from about room temperature to about 40° C, mixed in the desired ratio using standard methods and equipment (for example, a meter-mix unit) and applied using solventless application machinery having the capability of being heated from about 25° C to about 90° C. The adhesive composition of the present invention is utilized as a two component system wherein the two components are combined shortly before use. It may be desirable to heat the laminate at an elevated temperature (e.g., about 40° C to about 100° C) so as to accelerate full curing of the adhesive composition. Alternatively, the adhesive composition may be adjusted so as to be curable at approximately room temperature (e.g., about 20° C to about 40° C) over a period of from about 1 hour to about 7 days. Radiation may also be used to increase the cure rate of the adhesive.

Generally speaking, the adhesive compositions of the present invention are believed to be largely chemically cured through the reaction of the formulation constituents containing isocyanate groups and the constituents containing hydroxyl or other active hydrogen groups (e.g., the curative obtained by way of the multistage process previously described). However, curing can also be accomplished at least in part through moisture curing. Although sufficient moisture may be inherently present on the film or foil surfaces for this purpose, water may also be deliberately introduced through conventional methods if so desired.

Laminates prepared in accordance with the present invention may be used for packaging purposes in the same manner as conventional or known flexible laminated packaging films. The laminates are particularly suitable for forming into flexible pouch-shaped container vessels capable of being filed with a foodstuff and retorted. For example, two rectangular or square sheets of the laminate may be piled in the desired configuration or arrangement; preferably, the two layers of the two sheets which face each other are capable of being heat-sealed to each other. Three peripheral portions of the piled assembly are then heat-sealed to form the pouch. Heat-sealing can easily be accomplished by means of a heating bar, heating knife, heating wire, impulse sealer, ultrasonic sealer, or induction heating sealer.

The foodstuff is thereafter packed in the so-formed pouch. If necessary, gasses injurious to the foodstuff such as air are removed by known means such as vacuum degasification, hot packing, boiling degasification, or steam jetting or vessel deformation. The pouch opening is then sealed using heat. The packed pouch may be charged to a retorting apparatus and sterilized by heating to a temperature greater than about 100°C.

### EXAMPLES

### Example 1 (Comparative)

Glycerol (5.5 equivalents, based on hydroxyl; 31% by weight of total reaction mixture) and polypropylene glycol (1025 number average molecular weoight; 0.5 equivalents, based on hydroxyl; 47% by weight of total reaction mixture) were combined and reacted with adipic acid (2 equivalents, based on carboxyl; 27% by weight of total reaction mixture) at 227 degrees C under vacuum. After esterification, the reaction product separated due to poor reaction of the secondary hydroxyl groups of the polypropylene glycol.

### Example 2

Polypropylene glycol (1025 number average molecular weight; 2 equivalents, based on hydroxyl; 72% by wt of total reaction mixture) was reacted alone with adipic acid (4 equivalents, based on carboxyl; 27% by wt of total reaction mixture) at 238 degrees C to an acid number of 99 to carboxyl end-cap the first stage and react the secondary hydroxyl groups of the polypropylene glycol. The reaction mixture was cooled to 160 degrees C and glycerol (6 equivalents, based on hydroxyl; 13% by wt of total reaction mixture) was then added. The second stage was esterified at 230 degrees C until the acid number was less than 3.0. The reaction product was then dried by vacuum for an hour at 880 mbar (26 inches mercury) at 231 degrees C. The curative obtained had an equivalent weight (based on hydroxyl) of 355 and a viscosity of 4300 cps at 25 degrees C and was stable and did not separate. When 1 part by weight of the curative was reacted with 1.35 parts by weight of an isocyanate-functionalized polyurethane prepolymer (16 weight % NCO), a tough clear adhesive resulted.

### Example 3

Polypropylene glycol (2025 number average molecular weight; 2 equivalents, based on hydroxyl; 72% by wt of total reaction mixture) was reacted alone with adipic acid (4 equivalents, based on carboxyl; 27% by weight of total reaction mixture) at 239 degrees C for 2 hours to carboxyl end-cap the first stage and react the secondary hydroxyl groups of the polypropylene glycol. The reaction mixture was cooled and glycerol (6 equivalents, based on hydroxyl; 13% by weight of total reaction mixture) was then added. The second stage was esterified at 230 degrees C until the acid number was less than 3.0. The reaction mixture was then dried under vacuum for an hour at 880 mbar (26 inches mercury) and 231 degrees C. The curative obtained had a hydroxyl equivalent weight of 611 and a viscosity of 2700 cps at 25 degrees C and was stable and did not separate. When 1 part by weight of the curative was reacted with 1.16 parts by weight of an isocyanate-functionalized prepolymer (16 weight % NCO), a tough clear adhesive resulted.

### Example 4

Polypropylene glycol (425 number average molecular weight; 1.66 equivalents, based on hydroxyl; 72% by weight of total reaction mixture) was reacted alone with adipic acid (10 equivalents, based on carboxyl; 27% by weight of total reaction mixture) at 230 degrees C for 2 hours to carboxyl end-cap the first stage and react the secondary hydroxyl groups of the polypropylene glycol. The reaction mixture was cooled to 160 degrees C and glycerol (6 equivalents, based on hydroxyl; 13% by weight of total reaction mixture) and diethylene glycol (5.58 equivalents, based on hydroxyl) were then added. The second stage was esterified using a packed column (to contain the diethylene glycol) at 230 degrees C until the acid number was less than 10.0. The reaction mixture was then dried under vacuum for an hour at 880 mbar (26 inches mercury) and 229 degrees C. The curative obtained had a hydroxyl equivalent weight of 579 and a viscosity of 4500 cps at 25 degrees C and was stable and did not separate. When 150 parts by weight of the curative was reacted with 100 parts by wt of an isocyanate-functionalized polyurethane prepolymer (16 weight % NCO), a tough adhesive resulted.

### Example 5

Polypropylene glycol (1025 number average molecular weight; 2 equivalents, based on hydroxyl; 67.9% by weight of total reaction mixture) was reacted alone with orthophthalic anhydride (4 equivalents, based on carboxyl; 19.0% by weight of total reaction mixture) at 153 degrees C for 2 hours to carboxyl end-cap the first stage (forming the half ester of orthophthalic anhydride) and react the secondary hydroxyl groups of the polypropylene glycol. The reaction mixture was cooled to 134 degrees C and diethylene glycol (4 equivalents, based on hydroxyl, 15.1% of total reaction mix) was then added. The second stage was esterified using a packed column (to contain the diethylene glycol) at 230 degrees C until the acid number was less than 3.0. The reaction mixture was then dried under vacuum for a half hour at 880 mbar (26 inches mercury) and 239 degrees C. The curative obtained had a hydroxyl equivalent weight of 760, a viscosity of 4500 cps at 25 degrees C and was stable and did not separate. When 200 parts by weight of the curative was reacted with 100 parts by weight of an isocyanate-functionalized polyurethane prepolymer (16 weight % NCO), a flexible adhesive resulted.

## Claims

1. A two component laminating adhesive comprising Component A and
Component B, wherein Component A comprises at least one isocyanate-functionalized compound and Component B comprises a curative containing at least two primary hydroxyl groups per molecule, said curative having been obtained by a process comprising reacting a first polyol containing predominately secondary hydroxyl groups with a stoichiometric excess of a reactant selected from the group consisting of polybasic acids, polybasic acid anhydrides, and polybasic acid esters to form an intermediate containing at least two terminal functional groups per molecule selected from the group consisting of carboxylic acid and carboxylic acid ester and reacting said intermediate with a stoichiometric excess of a second polyol containing predominately primary hydroxyl groups,
wherein said second polyol is selected from the group consisting of glycerol, 1,2,6-hexanetriol, 1,2,4-butanetriol, and mixtures thereof.

2. The two component laminating adhesive of claim 1, wherein said first polyol is a polyalkylene glycol containing secondary hydroxyl groups.

3. The two component laminating adhesive of claim 2, wherein said first polyol is a polypropylene glycol.

4. The two component laminating adhesive of claim 1 to claim 3, wherein Component A comprises an isocyanate-functionalized polyurethane prepolymer.

5. The two component laminating adhesive of claim 1 to claim 4, wherein said reactant is selected from the group consisting of aliphatic linear saturated dicarboxylic acids containing from 4 to 12 carbon atoms, phthalic acids, orthophthalic acid anhydride, and mixtures thereof.

6. The two component laminating adhesive of claim 1 to claim 5, wherein said reactant is selected from the group consisting of adipic acid, orthophthalic acid anhydride, and mixtures thereof.

7. The two component laminating adhesive of Claim 1 wherein the Component B comprises a curative molecule having the structure:
Y-O-C(=O)-Z-C(=O)-O-CH(CH₃)-CH₂-O-(C₃H₆O)ₙ-CH₂-CH(CH₃)-O-C(=O)-Z'-C(=O)-O-Y'
wherein Y and Y' are HO-CH₂-CH(OH)-CH₂-,
Z and Z' are the same or different and are selected from the group consisting of -C₆H₄-, -(CH₂)ₒ- and combinations thereof,
o is an integer of from 2 to 10, and
n is 0 or an integer of from 1 to 100.

8. The two component laminating adhesive of claim 7 wherein n is an integer of from 4 to 50.

9. A curative having the structure:
Y-O-C(=O)-Z-C(=O)-O-CH(CH₃)-CH₂-O-(C₃H₆O)ₙ-CH₂-CH(CH₃)-O-C(=O)-Z'-C(=O)-O-Y'
wherein Y and Y' are HO-CH₂-CH(OH)-CH₂-,
Z and Z' are the same or different and are selected from the group consisting of -C₆H₄-, -(CH₂)o- and combinations thereof,
o is an integer of from 2 to 10, and
n is 0 or an integer of from 1 to 100.

10. A process for making a curative containing at least two primary hydroxyl groups per molecule comprising reacting a first polyol containing predominately secondary hydroxyl groups with a stoichiometric excess of a reactant selected from the group consisting of polybasic acids, polybasic acid anhydrides, and polybasic acid esters to form an intermediate containing at least two functional groups per molecule selected from the group consisting of carboxylic acid and carboxylic acid ester and reacting said intermediate with a stoichiometric excess of a second polyol containing predominately primary hydroxyl groups,
wherein said second polyol is selected from the group consisting of glycerol, 1,2,6-hexanetriol, 1,2,4-butanetriol, and mixtures thereof.

11. A laminate comprised of at least one polymeric film and the two component laminating adhesive of claim 1 to claim 7 in cured form.

12. The laminate of claim 11 comprised of at least two polymeric films, wherein the two component laminating adhesive is located between two of said polymeric films and adheres said polymeric films to each other.

13. The laminate of claim 11 or claim 12, wherein at least one polymeric film is comprised of a thermoplastic selected from the group consisting of polyethylene terephthalate, polyethylene, polypropylene, and polyvinylidene chloride.

14. The laminate of claim 11 to claim 13, wherein at least one polymeric film is metallized or has a coating comprised of an inorganic oxide deposited thereon.

15. A flexible film laminate comprising
(a) a first layer comprised of a first polyolefin or first polyester;
(b) a second layer comprised of a second polyolefin, which may be the same or different from the first polyolefin, a second polyester, which may be the same as or different from the first polyester, or a metal foil;
(c) an adhesive layer bonding the first layer to the second layer, said adhesive layer being obtained by combining and reacting Component A and Component B in accordance with the two component laminating adhesive of claim 1.

16. A method of making a flexible film laminate, said method comprising a) combining Component A and Component B in accordance with the two component laminating adhesive of claim 1 to form an adhesive mixture, b) joining a first flexible film and a second flexible film using the adhesive mixture interposed between the first flexible film and the second flexible film, and c) curing the adhesive mixture.

## Patentansprüche

1. Zwei-Komponenten-Kaschierklebstoff, umfassend Komponente A und Komponente B, wobei Komponente A mindestens eine Isocyanat-funktionalisierte Verbindung umfasst und Komponente B ein Härtungsmittel umfasst, das mindestens zwei primäre Hydroxylgruppen pro Molekül enthält, wobei das Härtungsmittel durch einen Vorgang erhalten worden ist, der das Umsetzen eines ersten Polyols, das vorwiegend sekundäre Hydroxylgruppen enthält, mit einem stöchiometrischen Überschuss eines Reaktanden, ausgewählt aus der Gruppe bestehend aus mehrbasigen Säuren, mehrbasigen Säureanhydriden und mehrbasigen Säureestern, um ein Zwischenprodukt auszubilden, das mindestens zwei terminale funktionelle Gruppen pro Molekül enthält, ausgewählt aus der Gruppe bestehend aus Carbonsäure und Carbonsäureester, und das Umsetzen des Zwischenprodukts mit einem stöchiometrischen Überschuss eines zweiten Polyols, das vorwiegend primäre Hydroxylgruppen enthält, umfasst,
wobei das zweite Polyol ausgewählt ist aus der Gruppe bestehend aus Glycerin, 1,2,6-Hexantriol, 1,2,4-Butantriol und Mischungen daraus.

2. Zwei-Komponenten-Kaschierklebstoff nach Anspruch 1, wobei das erste Polyol ein Polyalkylenglycol ist, das sekundäre Hydroxylgruppen enthält.

3. Zwei-Komponenten-Kaschierklebstoff nach Anspruch 2, wobei das erste Polyol ein Polypropylenglycol ist.

4. Zwei-Komponenten-Kaschierklebstoff nach Anspruch 1 bis 3, wobei Komponente A ein Isocyanat-funktionalisiertes Polyurethan-Präpolymer umfasst.

5. Zwei-Komponenten-Kaschierklebstoff nach Anspruch 1 bis 4, wobei der Reaktand ausgewählt ist aus der Gruppe bestehend aus aliphatischen linearen gesättigten Dicarbonsäuren, die 4 bis 12 Kohlenstoffatome enthalten, Phthalsäuren, Orthophthalsäureanhydrid und Mischungen daraus.

6. Zwei-Komponenten-Kaschierklebstoff nach Anspruch 1 bis 5, wobei der Reaktand ausgewählt ist aus der Gruppe bestehend aus Adipinsäure, Orthophthalsäureanhydrid und Mischungen daraus.

7. Zwei-Komponenten-Kaschierklebstoff nach Anspruch 1, wobei die Komponente B ein Härtungsmittelmolekül mit der folgenden Struktur umfasst:
Y-O-C(=O)-Z-C(=O)-O-CH(CH₃)-CH₂-O-(C₃H₆O)ₙ-CH₂-CH(CH₃)-O-C(=O)-Z'-C(=O)-O-Y',
wobei Y und Y' HO-CH₂-CH(OH)-CH₂- sind,
Z und Z' gleich oder verschieden sind und ausgewählt sind aus der Gruppe bestehend aus -C₆H₄-, -(CH₂)ₒ- und Kombinationen daraus,
o eine ganze Zahl von 2 bis 10 ist und
n 0 oder eine ganze Zahl von 1 bis 100 ist.

8. Zwei-Komponenten-Kaschierklebstoff nach Anspruch 7, wobei n eine ganze Zahl von 4 bis 50 ist.

9. Härtungsmittel mit der Struktur:
Y-O-C(=O)-Z-C(=O)-O-CH(CH₃)-CH₂-O-(C₃H₆O)ₙ-CH₂-CH(CH₃)-O-C(=O)-Z'-C(=O)-O-Y',
wobei Y und Y' HO-CH₂-CH(OH)-CH₂- sind,
Z und Z' gleich oder verschieden sind und ausgewählt sind aus der Gruppe bestehend aus -C₆H₄-, -(CH₂)ₒ- und Kombinationen daraus,
o eine ganze Zahl von 2 bis 10 ist und
n 0 oder eine ganze Zahl von 1 bis 100 ist.

10. Vorgang zum Herstellen eines Härtungsmittels, das mindestens zwei primäre Hydroxylgruppen pro Molekül enthält, umfassend das Umsetzen eines ersten Polyols, das vorwiegend sekundäre Hydroxylgruppen enthält, mit einem stöchiometrischen Überschuss eines Reaktanden, ausgewählt aus der Gruppe bestehend aus mehrbasigen Säuren, mehrbasigen Säureanhydriden und mehrbasigen Säureestern, um ein Zwischenprodukt auszubilden, das mindestens zwei funktionelle Gruppen pro Molekül enthält, ausgewählt aus der Gruppe bestehend aus Carbonsäure und Carbonsäureester, und das Umsetzen des Zwischenprodukts mit einem stöchiometrischen Überschuss eines zweiten Polyols, das vorwiegend primäre Hydroxylgruppen enthält,
wobei das zweite Polyol ausgewählt ist aus der Gruppe bestehend aus Glycerin, 1,2,6-Hexantriol, 1,2,4-Butantriol und Mischungen daraus.

11. Laminat, bestehend aus mindestens einer Polymerfolie und dem Zwei-Komponenten-Kaschierklebstoff nach Anspruch 1 bis 7 in ausgehärteter Form.

12. Laminat nach Anspruch 11, bestehend aus mindestens zwei Polymerfolien, wobei der Zwei-Komponenten-Kaschierklebstoff zwischen zwei der Polymerfolien angeordnet ist und die Polymerfolien aneinanderhaften lässt.

13. Laminat nach Anspruch 11 oder 12, wobei mindestens eine Polymerfolie aus einem Thermoplast besteht, ausgewählt aus der Gruppe bestehend aus Polyethylenterephthalat, Polyethylen, Polypropylen und Polyvinylidenchlorid.

14. Laminat nach Anspruch 11 oder 13, wobei mindestens eine Polymerfolie metallisiert ist oder eine Beschichtung, bestehend aus einem darauf abgeschiedenen anorganischen Oxid, aufweist.

15. Flexibles Folienlaminat, umfassend:
(a) eine erste Schicht, bestehend aus einem ersten Polyolefin oder einem ersten Polyester;
(b) eine zweite Schicht, bestehend aus einem zweiten Polyolefin, welches mit dem ersten Polyolefin identisch oder davon verschieden sein kann, einem zweiten Polyester, welcher mit dem ersten Polyester identisch oder davon verschieden sein kann, oder einer Metallfolie;
(c) eine Klebstoffschicht, die die erste Schicht an der zweiten Schicht anhaftet, wobei die Klebstoffschicht durch Kombinieren und Umsetzen von Komponente A und Komponente B gemäß des Zwei-Komponenten-Kaschierklebstoffs nach Anspruch 1 zu erhalten ist.

16. Verfahren zum Herstellen eines flexiblen Folienlaminats, wobei das Verfahren umfasst: a) Kombinieren von Komponente A und Komponente B gemäß dem Zwei-Komponenten-Kaschierklebstoff nach Anspruch 1, um eine Klebstoffmischung auszubilden, b) Verbinden einer ersten flexiblen Folie und einer zweiten flexiblen Folie unter Einsatz der Klebstoffmischung zwischen der ersten flexiblen Folie und der zweiten flexiblen Folie und c) Aushärten der Klebstoffmischung.

## Revendications

1. Adhésif de stratification à deux composants comprenant le composant A et le composant B, dans lequel le composant A comprend au moins un composé à fonction isocyanate et le composant B comprend un agent de durcissement contenant au moins deux groupes hydroxyle primaires par molécule, ledit agent de durcissement ayant été obtenu par un procédé comprenant la réaction d'un premier polyol contenant principalement des groupes hydroxyle secondaires avec un excès stoechiométrique d'un réactif choisi dans le groupe constitué par les acides polybasiques, les anhydrides d'acide polybasique et les esters d'acide polybasique pour former un intermédiaire contenant au moins deux groupes fonctionnels terminaux par molécule choisis dans le groupe constitué par l'acide carboxylique et l'ester d'acide carboxylique et la réaction dudit intermédiaire avec un excès stoechiométrique d'un second polyol contenant principalement des groupes hydroxyle primaires,
dans lequel ledit second polyol est choisi dans le groupe constitué par le glycérol, le 1,2,6-hexanetriol, le 1,2,4-butanetriol et des mélanges de ceux-ci.

2. Adhésif de stratification à deux composants selon la revendication 1, dans lequel ledit premier polyol est un polyalkylène glycol contenant des groupes hydroxyle secondaires.

3. Adhésif de stratification à deux composants selon la revendication 2, dans lequel ledit premier polyol est un polypropylène glycol.

4. Adhésif de stratification à deux composants selon la revendication 1 à la revendication 3, dans lequel le composant A comprend un prépolymère de polyuréthane à fonction isocyanate.

5. Adhésif de stratification à deux composants selon la revendication 1 à la revendication 4, dans lequel ledit réactif est choisi dans le groupe constitué par des acides dicarboxyliques saturés linéaires aliphatiques contenant entre 4 et 12 atomes de carbone, des acides phtaliques, l'anhydride d'acide orthophtalique et des mélanges de ceux-ci.

6. Adhésif de stratification à deux composants selon la revendication 1 à la revendication 5, dans lequel ledit réactif est choisi dans le groupe constitué par l'acide adipique, l'anhydride d'acide orthophtalique et des mélanges de ceux-ci.

7. Adhésif de stratification à deux composants selon la revendication 1, dans lequel le composant B comprend une molécule de durcissement ayant la structure :
Y-O-C(=O)-Z-C(=O)-O-CH(CH₃)-CH₂-O-(C₃H₆O)ₙ-CH₂-CH(CH₃)-O-C(=O)-Z'-C(=O)-O-Y'
dans laquelle Y et Y 'sont HO-CH₂-CH(OH)-CH₂-,
Z et Z' sont identiques ou différents et sont choisis dans le groupe constitué par -C₆H₄-, -(CH₂)ₒ- et des combinaisons de ceux-ci,
o est un nombre entier compris entre 2 et 10, et
n est 0 ou un nombre entier compris entre 1 et 100.

8. Adhésif de stratification à deux composants selon la revendication 7, dans lequel n est un nombre entier compris entre 4 et 50.

9. Agent de durcissement ayant la structure :
Y-O-C(=O)-Z-C(=O)-O-CH(CH₃)-CH₂-O-(C₃H₆O)ₙ-CH₂-CH(CH₃)-O-C(=O)-Z'-C(=O)-O-Y'
dans laquelle Y et Y' sont HO-CH₂-CH(OH)-CH₂-,
Z et Z' sont identiques ou différents et sont choisis dans le groupe constitué par -C₆H₄-, -(CH₂)ₒ- et des combinaisons de ceux-ci,
o est un nombre entier compris entre 2 et 10, et
n est 0 ou un nombre entier compris entre 1 et 100.

10. Procédé de fabrication d'un agent de durcissement contenant au moins deux groupes hydroxyle primaires par molécule comprenant la réaction d'un premier polyol contenant principalement des groupes hydroxyle secondaires avec un excès stoechiométrique d'un réactif choisi dans le groupe constitué par les acides polybasiques, les anhydrides d'acide polybasique et les esters d'acide polybasique pour former un intermédiaire contenant au moins deux groupes fonctionnels par molécule choisis dans le groupe constitué par l'acide carboxylique et l'ester d'acide carboxylique et la réaction dudit intermédiaire avec un excès stoechiométrique d'un second polyol contenant principalement des groupes hydroxyle primaires,
dans lequel ledit second polyol est choisi dans le groupe constitué par le glycérol, le 1,2,6-hexanetriol, le 1,2,4-butanetriol et des mélanges de ceux-ci.

11. Stratifié constitué d'au moins un film polymère et de l'adhésif de stratification à deux composants selon la revendication 1 à la revendication 7 sous forme durcie.

12. Stratifié selon la revendication 11 constitué d'au moins deux films polymères, dans lequel l'adhésif de stratification à deux composants est situé entre deux desdits films polymères et colle lesdits films polymères l'un à l'autre.

13. Stratifié selon la revendication 11 ou la revendication 12, dans lequel au moins un film polymère est constitué d'un thermoplastique choisi dans le groupe constitué par le polyéthylène téréphtalate, le polyéthylène, le polypropylène et le chlorure de polyvinylidène.

14. Stratifié selon la revendication 11 à la revendication 13, dans lequel au moins un film polymère est métallisé ou comporte un revêtement constitué d'un oxyde inorganique déposé sur celui-ci.

15. Stratifié de film flexible comprenant
(a) une première couche constituée d'une première polyoléfine ou d'un premier polyester ;
(b) une seconde couche constituée d'une seconde polyoléfine qui peut être identique à ou différente de la première polyoléfine, un second polyester, qui peut être identique au ou différent du premier polyester, ou d'une feuille métallique ;
(c) une couche adhésive liant la première couche à la seconde couche, ladite couche adhésive étant obtenue en combinant et en faisant réagir le composant A et le composant B par rapport à l'adhésif de stratification à deux composants selon la revendication 1.

16. Procédé de fabrication d'un stratifié de film flexible, ledit procédé comprenant a) la combinaison du composant A et du composant B par rapport à l'adhésif de stratification à deux composants selon la revendication 1 pour former un mélange adhésif, b) la liaison d'un premier film flexible et d'un second film flexible en utilisant le mélange adhésif interposé entre le premier film flexible et le second film flexible, et c) le durcissement du mélange adhésif.
